# EUROPEAN PATENT APPLICATION

(11) **EP 4 723 218 A1**
(43) Date of publication of application: **08.04.2026**
(21) Application number: 24815314.0
(22) Date of filing: 21.05.2024
(51) Int. Cl.: H01M 4/38, C01B 33/02, H01M 4/36

(54) **COMPOSITE PARTICLES FOR NEGATIVE ELECTRODE MATERIAL, AND SECONDARY BATTERY**

(30) Priority: 31.05.2023 JP 2023090212
(71) Applicant: Panasonic Intellectual Property Management Co., Ltd., Kadoma-shi, Osaka 571-0057 (JP)
(72) Inventor: ASANO, Taisuke, Kadoma-shi, Osaka 571-0057 (JP); BADAR, Saifullah, Kadoma-shi, Osaka 571-0057 (JP)
(74) Representative: Novagraaf International SA
(86) International application number: PCT/JP2024/018753
(87) International publication number: WO 2024/247830

(57) **Abstract**

A composite particle 10 for a negative electrode material according to the present disclosure, includes: a carbon phase 1; and silicon particles 2 dispersed in the carbon phase 1, wherein in an X-ray diffraction pattern obtained by X-ray diffraction measurement using Cu-Kα radiation, a full width at half maximum of an X-ray diffraction peak derived from a Si(111) plane is 0.1° or more and less than 0.75°, and an average value of aspect ratios of the silicon particles 2 is 1.0 or more and 1.6 or less.

## Description

### TECHNICAL FIELD

The present disclosure relates to a composite particle for a negative electrode material and a secondary battery.

### BACKGROUND ART

Studies have been conducted on composite materials containing silicon and a carbon material as negative electrode materials for increasing the capacity of lithium-ion batteries. Patent Literature 1 discloses a negative electrode active material for a lithium secondary battery, being a porous silicon-carbon-based composite that has numerous pores and includes a plurality of silicon nanoparticles embedded in a carbon-based material.

### CITATION LIST

### Patent Literature

Patent Literature 1: JP 2022-501787 A

### SUMMARY OF INVENTION

### Technical Problem

In conventional techniques, enhancement in the initial charge and discharge efficiency of a battery using a composite material containing silicon and a carbon material as an active material has been desired.

### Solution to Problem

The composite particle for a negative electrode material according to the present disclosure, includes:
a carbon phase; and
silicon particles dispersed in the carbon phase, wherein
in an X-ray diffraction pattern obtained by X-ray diffraction measurement using Cu-Kα radiation, a full width at half maximum of an X-ray diffraction peak derived from a Si(111) plane is 0.1° or more and less than 0.75°, and
an average value of aspect ratios of the silicon particles is 1.0 or more and 1.6 or less.

### Advantageous Effects of Invention

The technique of the present disclosure can provide a composite particle for a negative electrode material that can enhance the initial charge and discharge efficiency of a battery.

### BRIEF DESCRIPTION OF DRAWINGS

FIG. 1 is a cross-sectional view schematically showing the configuration of an example of a composite particle for a negative electrode material according to Embodiment 1.
FIG. 2 is a cross-sectional view schematically showing the configuration of a secondary battery according to Embodiment 2.

### DESCRIPTION OF EMBODIMENTS

Embodiments of the present disclosure are described in detail below with reference to the drawings. The present disclosure is not limited to the following embodiments.

### (Embodiment 1)

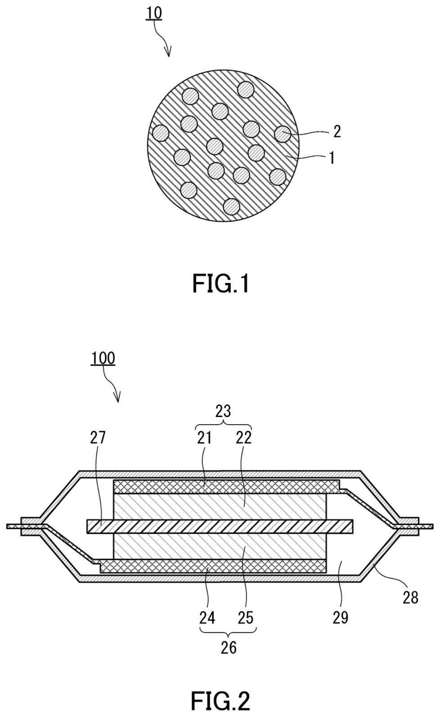

FIG. 1 is a cross-sectional view schematically showing the configuration of an example of a composite particle for a negative electrode material according to Embodiment 1. A composite particle 10 includes a carbon phase 1 and silicon particles 2. The silicon particles 2 are dispersed in the carbon phase 1. In an X-ray diffraction pattern obtained by X-ray diffraction measurement of the composite particle 10 using Cu-Kα radiation, the full width at half maximum of an X-ray diffraction peak derived from the Si(111) plane is 0.1° or more and less than 0.75°. The average value of the aspect ratios of the silicon particles 2 is 1.0 or more and 1.6 or less.

In the present disclosure, the aspect ratio of the silicon particle 2 refers to the ratio of the longest diameter (i.e., the length of the long axis) of the silicon particle 2 to the shortest diameter (i.e., the length of the short axis) of the silicon particle 2, that is, the length of the long axis/the length of the short axis.

The aspect ratio of the silicon particle 2 can be determined from an SEM image of the composite particle 10 obtained using a scanning electron microscope (SEM). That is, from a cross-sectional SEM image of the composite particle 10 in which the silicon particles 2 are exposed, the shortest diameter and the longest diameter of the silicon particle 2 are specified to calculate the aspect ratio. The average value of the aspect ratios can be determined by calculating the aspect ratios of 500 silicon particles 2 randomly extracted from an SEM image of the composite particle 10 and calculating the median of the number-based distribution thereof.

The X-ray diffraction pattern of the composite particle 10 can be obtained by θ-2θ X-ray diffraction measurement using Cu-Kα radiation having wavelengths of 1.5405 Å and 1.5444 Å, that is, wavelengths of 0.15405 nm and 0.15444 nm.

The diffraction angle of a peak in an X-ray diffraction pattern is defined as an angle at which the maximum intensity is observed in a projecting portion having an SN ratio (i.e., the ratio of a signal S to background noise N) of 1.3 or more and a full width at half maximum of 10° or less. The full width at half maximum refers to the width represented by the difference between two diffraction angles at which the intensity of an X-ray diffraction peak is half of a maximum intensity I_{MAX} of the X-ray diffraction peak.

The X-ray diffraction peak derived from the Si(111) plane is, for example, an X-ray diffraction peak having the highest intensity within a diffraction angle 20 range from 28.1° to 28.7°, and is, for example, an X-ray diffraction peak located at a diffraction angle 2θ of 28.4°.

In the composite particle 10, the silicon particles 2 being crystalline and having a small aspect ratio are dispersed in the carbon phase 1. In other words, the carbon phase 1 including a carbonaceous material coats the silicon particles 2 being crystalline and having a small aspect ratio. Owing to the small aspect ratio of the silicon particles 2, the coating property of the carbon phase 1 is enhanced, enabling the pore volume of the composite particle 10 to be reduced. Accordingly, in a battery using the composite particle 10, side reactions between the electrolyte solution and the composite particle 10 can be suppressed, thereby enhancing the initial charge and discharge efficiency. Furthermore, owing to the small aspect ratio of the silicon particles 2, the amount of expansion of the silicon particles 2 during charging and discharging of the battery can also be reduced, thereby suppressing the occurrence of cracking of the composite particle 10, which can cause side reactions with the electrolyte solution. Therefore, according to the above configuration, the initial charge and discharge efficiency of a battery using the composite particle 10 can be enhanced.

The average value of the aspect ratios of the silicon particles 2 may be 1.1 or more and 1.6 or less.

In the X-ray diffraction pattern obtained by X-ray diffraction measurement of the composite particle 10 using Cu-Kα radiation, the full width at half maximum of the X-ray diffraction peak derived from the Si(111) plane may be 0.2° or more and 0.4° or less.

The carbon phase 1 is a matrix composed of a carbonaceous material. The carbonaceous material may be any carbon material capable of occluding lithium ions. The carbonaceous material may be amorphous. The carbon phase 1 may be composed of an amorphous carbonaceous material. Examples of the carbonaceous material include a material derived from pitch, amorphous carbon, and carbon black. Examples of the pitch include coal pitch and petroleum pitch. According to this configuration, it is possible to further stabilize, within the composite particle, electrical connection between the silicon particles 2 and electrical connection between the silicon particles 2 and the carbonaceous material.

In the X-ray diffraction pattern obtained by X-ray diffraction measurement of the composite particle 10 using Cu-Kα radiation, the full width at half maximum of an X-ray diffraction peak derived from the C(002) plane within a diffraction angle 20 range from 23.0° to 26.0° may be 4.0° or more and 9.5° or less. Here, the X-ray diffraction peak derived from the C(002) plane is, for example, an X-ray diffraction peak having the highest intensity within the diffraction angle 2θ range from 23.0° to 26.0°.

The silicon particles 2 are, for example, silicon nanoparticles. The average particle diameter of the silicon particles 2 may be 10 nm or more and 110 nm or less or 10 nm or more and 100 nm or less. The average particle diameter of the silicon particles 2 may be 25 nm or more and 65 nm or less. According to the above configuration, the initial charge and discharge efficiency of the battery can be enhanced.

The average particle diameter of the silicon particles 2 can be determined from an SEM image of the composite particle 10 obtained using an SEM. That is, the average particle diameter of the silicon particles 2 can be measured from a cross-sectional SEM image of the composite particle 10 in which the cross sections of the silicon particles 2 are exposed. The average particle diameter can be determined by measuring the particle diameters of 500 silicon particles 2 randomly extracted from the SEM image of the composite particle 10 and calculating the median diameter (D50) thereof. Here, the maximum Feret diameter of the silicon particle 2 in the obtained SEM image can be regarded as the particle diameter of the silicon particle 2. The "maximum Feret diameter" is the maximum length of a perpendicular line that can be drawn between two parallel lines sandwiching the particle.

The median of the number-based distribution of the particle diameters of 500 silicon particles 2 measured by SEM observation is regarded as the median diameter of the silicon particles 2.

The average particle diameter of the composite particles 10 may be 1 µm or more and 10 µm or less. The average particle diameter of the composite particles 10 can be measured, for example, in the same manner as the average particle diameter of the silicon particles 2.

The pore volume of the composite particle 10 may be 0.10 cc/g or less. The pore volume of the composite particle 10 may be 0.01 cc/g or more. The pore volume of the composite particle 10 may be 0.01 cc/g or more and 0.08 cc/g or less or 0.01 cc/g or more and 0.05 cc/g or less. Owing to the carbon phase 1 being a dense carbonaceous material and the silicon particles 2 being coated with the dense carbon phase 1, the initial charge and discharge efficiency of the battery can be enhanced.

The pore volume of the composite particle 10 is determined, for example, by the Barrett-Joyner-Halenda (BJH) method using a nitrogen gas adsorption apparatus.

The specific surface area of the composite particle 10 may be 15.0 m²/g or less or 11.0 m²/g or less. In the present disclosure, the specific surface area refers to the BET specific surface area that can be measured by the BET method. The specific surface area of the composite particle 10 may be 2.0 m²/g or more and 11.0 m²/g or less, 5.0 m²/g or more and 11.0 m²/g or less, 6.0 m²/g or more and 11.0 m²/g or less, or 6.0 m²/g or more and 9.0 m²/g or less. According to the above configuration, the initial charge and discharge efficiency of the battery can be enhanced.

The true density of the composite particle 10 may be 2.2 g/cc or less. The true density of the composite particle 10 may be 2.0 g/cc or more and 2.2 g/cc or less. According to the above configuration, owing to the silicon particles 2 being coated with the dense carbon phase 1, the initial charge and discharge efficiency of the battery can be enhanced. The true density of the composite particle 10 can be measured, for example, by a pycnometer method using He gas.

The percentage of Si in the composite particle 10 may be 35.0 mass% or more and 60.0 mass% or less. The percentage of Si in the composite particle 10 may be 38.0 mass% or more and 60.0 mass% or less or 38.9 mass% or more and 50.0 mass% or less. According to the above configuration, the initial charge and discharge efficiency of the battery can be enhanced.

The composite particle 10 may further contain N (nitrogen). According to the above configuration, the conductivity of the composite particle 10 can be enhanced. Furthermore, oxidation of the silicon can be suppressed. According to the above, the initial charge and discharge efficiency of the battery can be enhanced. The percentage of N in the composite particle 10 may be 0.02 mass% or more and 2.0 mass% or less or 0.05 mass% or more and 1.0 mass% or less. The percentage of N in the composite particle 10 may be 0.05 mass% or more and 0.7 mass% or less or 0.05 mass% or more and 0.5 mass% or less. According to the above configuration, the initial charge and discharge efficiency of the battery can be enhanced. N contained in the composite particle 10 is derived, for example, from a binder used in the manufacturing process of the composite particle 10. According to the above configuration, the conductivity at the interface between the carbon phase 1 and the silicon particles 2 is enhanced, suppressing oxidation of the silicon during manufacture.

The composite particle 10 may further contain O (oxygen). The percentage of O in the composite particle 10 may be 7 mass% or less, less than 6.8 mass%, or less than 6.3 mass%. The percentage of O in the composite particle 10 may be 1 mass% or more and 7 mass% or less, 4 mass% or more and less than 6.8 mass%, or 5 mass% or more and 6.25 mass% or less. According to the above configuration, the initial charge and discharge efficiency of the battery can be enhanced.

The percentage of C in the composite particle 10 may be 35 mass% or more and 60 mass% or less or 35 mass% or more and 55 mass% or less. According to the above configuration, the initial charge and discharge efficiency of the battery can be enhanced.

The mass percentage of Si in the composite particle 10 can be measured by Si-NMR. The mass percentage of C in the composite particle 10 can be measured by a combustion-infrared absorption method using a carbon/sulfur analyzer. The mass percentage of N in the composite particle 10 can be measured, for example, by an inert gas fusion-thermal conductivity detector (TCD) method using an oxygen/nitrogen/hydrogen analyzer. The mass percentage of O in the composite particle 10 can be measured, for example, by an inert gas fusion-nondispersive infrared absorption (NDIR) method using an oxygen/nitrogen/hydrogen analyzer.

The composite particle 10 may further include other components in addition to the above-described components. The composite particle 10 may include other components in a percentage of more than 0 mass% and 20 mass% or less, more than 0 mass% and 10 mass% or less, more than 0 mass% and 5 mass% or less, or more than 0 mass% and 2 mass% or less.

The composite particle 10 is used, for example, as a negative electrode active material.

### (Method for Manufacturing Composite Particle for Negative Electrode Material)

An example of a method for manufacturing the composite particle for a negative electrode material according to Embodiment 1 is described. The method for manufacturing the composite particle for a negative electrode material according to Embodiment 1 includes: mixing silicon particles and a carbon source; pressure-forming the resulting mixture; heat-treating the resulting formed body; and coating the heat-treated formed body with carbon.

In the mixing the silicon particles and the carbon source, a binder may be mixed. That is, the method for manufacturing the composite particle for a negative electrode material according to Embodiment 1 may include: mixing silicon particles, a carbon source, and a binder; pressure-forming the resulting mixture; heat-treating the resulting formed body; and coating the heat-treated formed body with carbon.

As the silicon particles, the same silicon particles as the above-described silicon particles 2 can be used.

As the carbon source, for example, pitch, tar, a thermoplastic resin, or a thermosetting resin can be used. The carbon source may be pitch, and the pitch may be coal pitch or petroleum pitch.

Examples of the binder include polycarboxylic acid ammonium salt, polyvinylpyrrolidone, polyacrylic acid ammonium salt, carboxymethyl cellulose ammonium salt, polyalkylene polyamine, polyacrylamide, polyethyleneimine, and polyethylene glycol. The binder may be a polymer that is converted into amorphous carbon under the conditions of the heat treatment of the formed body. According to the above configuration, within the composite particle for a negative electrode material, electrical connection between the silicon particles and electrical connection between the silicon particles and the carbonaceous material are stabilized. The binder may have a structure containing N. According to the above configuration, it is possible to manufacture a composite particle for a negative electrode material that can enhance the initial charge and discharge efficiency of the battery. The binder may be polyvinylpyrrolidone.

The means for mixing the silicon particles, the carbon source, and the binder is not particularly limited, and the mixing may be performed, for example, using a rocking mill.

Subsequently, the pressure-forming of the mixture is performed, for example, by cold isostatic pressing (CIP). Alternatively, the pressure-forming may be performed using a uniaxial press.

Subsequently, the resulting formed body is heat-treated, whereby the carbon source and the binder can be carbonized. The carbon source and the binder can be carbonized to form amorphous carbon. Through the above process, a composite particle of silicon and carbon is obtained.

The temperature of the heat treatment of the formed body is, for example, 700°C or more and 1,000°C or less. The time of the heat treatment is, for example, 1 hour or more and 10 hours or less, and may be 5 hours or less. The heat treatment may be performed in an inert atmosphere.

The heat-treated formed body may be pulverized. The particle diameter may be adjusted to a desired value by pulverization.

Subsequently, the formed body pulverized is coated with carbon. For example, the formed body pulverized is coated with the carbon source and heat-treated under the above-described conditions, thereby allowing coating with carbon. The pulverization of the formed body and the coating with carbon may be repeated multiple times. The pulverization may be performed, for example, using a cutter mill.

Thus, the composite particle for a negative electrode material according to Embodiment 1 is obtained.

### (Embodiment 2)

A secondary battery according to Embodiment 2 includes a negative electrode, a positive electrode, and an electrolyte. The negative electrode includes a negative electrode material that includes the composite particle for a negative electrode material according to Embodiment 1. That is, in the secondary battery according to Embodiment 2, the negative electrode includes the composite particle for a negative electrode material according to Embodiment 1.

FIG. 2 is a cross-sectional view schematically showing the configuration of the secondary battery according to Embodiment 2. A secondary battery 100 includes a positive electrode 23, a negative electrode 26, a separator 27, a nonaqueous electrolyte 29, and an outer casing 28. The positive electrode 23, the negative electrode 26, the nonaqueous electrolyte 29, and the separator 27 are housed in the outer casing 28. The separator 27 is disposed between the positive electrode 23 and the negative electrode 26. The positive electrode 23 and the negative electrode 26 face each other with the separator 27 interposed therebetween. The positive electrode 23 includes a positive electrode mixture layer 22 and a positive electrode current collector 21. The positive electrode mixture layer 22 is disposed between the positive electrode current collector 21 and the separator 27. The negative electrode 26 includes a negative electrode mixture layer 25 and a negative electrode current collector 24. The negative electrode mixture layer 25 is disposed between the negative electrode current collector 24 and the separator 27.

The positive electrode mixture layer 22 includes a positive electrode active material capable of occluding and releasing lithium ions. Examples of the positive electrode active material include a lithium-containing transition metal oxide, a lithium-containing transition metal phosphate, a transition metal fluoride, a polyanion material, a fluorinated polyanion material, a transition metal sulfide, a transition metal oxysulfide, and a transition metal oxynitride. In particular, when a lithium-containing transition metal oxide or a lithium-containing transition metal phosphate is used as the positive electrode active material, the battery can be manufactured at a reduced cost and exhibit an increased average discharge voltage. Examples of lithium-containing transition metal oxides include lithium cobalt oxides, lithium nickel cobalt aluminum oxides, lithium nickel cobalt manganese oxides, and lithium nickel manganese oxides. Examples of lithium-containing transition metal phosphates include lithium iron phosphates, lithium vanadium phosphates, lithium cobalt phosphates, and lithium nickel phosphates. At least one selected from these positive electrode active materials can be used.

The positive electrode mixture layer 22 may include a conductive additive, an ion conductor, and a binder as necessary.

The conductive additive and the ion conductor are used to reduce the resistance of the electrode. Examples of the conductive additive include a carbon material and a conductive polymer compound. Examples of carbon materials include carbon black, graphite, acetylene black, carbon nanotubes, carbon nanofibers, graphene, fullerenes, and graphite oxide. Examples of conductive polymer compounds include polyaniline, polypyrrole, and polythiophene. At least one selected from these conductive additives can be used.

The binder is used to enhance the binding properties of the materials constituting the electrode. Examples of the binder include polymer materials, such as polyvinylidene fluoride, a vinylidene fluoride-hexafluoropropylene copolymer, a vinylidene fluoride-tetrafluoroethylene copolymer, polytetrafluoroethylene, carboxymethyl cellulose, polyacrylic acid, styrene-butadiene copolymer rubber, polypropylene, polyethylene, and polyimide. At least one selected from these binders can be used.

The positive electrode current collector 21 is, for example, a sheet or film formed of a metal material such as aluminum, an aluminum alloy, stainless steel, titanium, or a titanium alloy. The sheet or film may be porous or non-porous. The sheet or film is metal foil, metal mesh, or the like. A carbon material as a conductive auxiliary material may be applied to the surface of the positive electrode current collector 21.

The negative electrode mixture layer 25 includes a negative electrode material. The negative electrode material includes the composite particle for a negative electrode material according to Embodiment 1. The negative electrode material (the negative electrode mixture layer 25) may include a conductive additive, an ion conductor, and a binder as necessary. The materials that can be used as the conductive additive, the ion conductor, and the binder in the positive electrode mixture layer 22 can also be used in the negative electrode mixture layer 25.

The negative electrode current collector 24 is, for example, a sheet or film formed of a metal material such as stainless steel, nickel, a nickel alloy, copper, or a copper alloy. The sheet or film may be porous or non-porous. The sheet or film is metal foil, metal mesh, or the like. A carbon material as a conductive auxiliary material may be applied to the surface of the negative electrode current collector 24.

The separator 27 is an electrolyte layer having lithium-ion conductivity. The material of the separator 27 may be any material through which lithium ions are allowed to pass. The material of the separator 27 can be at least one selected from the group consisting of a solid electrolyte, a gel electrolyte, an ion exchange resin membrane, a semipermeable membrane, and a porous membrane. When the separator 27 is formed of any of these materials, the safety of the secondary battery 100 can be sufficiently ensured. Examples of the solid electrolyte include sulfide solid electrolytes, such as Li₂S-P₂S₅, and oxide solid electrolytes, such as Li₇La₃Zr₂O₁₂ (LLZ). Examples of the gel electrolyte include gel electrolytes containing a fluororesin, such as PVdF. Examples of the ion exchange resin membrane include cation exchange membranes and anion exchange membranes. Examples of the porous membrane include porous membranes made of a polyolefin resin and porous membranes formed of glass paper obtained by weaving glass fibers into a nonwoven fabric.

The nonaqueous electrolyte 29 may be impregnated in the positive electrode 23, the negative electrode 26, and the separator 27. The nonaqueous electrolyte 29 may fill the interior space of the outer casing 28. The action of the nonaqueous electrolyte 29 allows lithium ions to migrate between the positive electrode 23 and the negative electrode 26. The nonaqueous electrolyte 29 may include a nonaqueous electrolyte solution, a gel electrolyte, or an ionic liquid.

The nonaqueous electrolyte solution includes, for example, a nonaqueous solvent and a lithium salt.

The nonaqueous solvent can be a cyclic carbonate, a chain carbonate, a cyclic ether, a chain ether, a cyclic ester, a chain ester, a fluorinated solvent, a nitrile, or the like. Examples of cyclic carbonates include ethylene carbonate, propylene carbonate, and butylene carbonate. Examples of chain carbonates include dimethyl carbonate, ethyl methyl carbonate, and diethyl carbonate. Examples of cyclic ethers include tetrahydrofuran, 1,4-dioxane, and 1,3-dioxolane. Examples of chain ethers include 1,2-dimethoxyethane and 1,2-diethoxyethane. Examples of cyclic esters include γ-butyrolactone. Examples of chain esters include methyl acetate. Examples of fluorinated solvents include fluoroethylene carbonate, methyl fluoropropionate, fluorobenzene, fluoroethylmethyl carbonate, and fluorodimethylene carbonate. Examples of nitriles include acetonitrile. At least one selected from these nonaqueous solvents can be used.

Examples of the lithium salt include lithium hexafluorophosphate (LiPF₆), lithium tetrafluoroborate (LiBF₄), lithium perchlorate (LiClO₄), lithium bis(fluorosulfonyl)imide (LiFSI), lithium bis(trifluoromethanesulfonyl)imide (LiTFSI), lithium bis(perfluoroethylsulfonyl)imide (LiN(SO₂C₂F₅)₂), LiAsF₆, LiCF₃SO₃, and lithium difluoro(oxalato)borate. At least one selected from these lithium salts can be used.

The gel electrolyte can be a material obtained by impregnating a polymer material with a nonaqueous electrolyte solution. Examples of the polymer material include polyethylene oxide, polyacrylonitrile, polyvinylidene fluoride, polymethyl methacrylate, and a polymer having an ethylene oxide bond.

Examples of a cation constituting the ionic liquid include an aliphatic chain quaternary cation, an aliphatic cyclic ammonium, and a nitrogen-containing heterocyclic aromatic cation. Examples of aliphatic chain quaternary cations include tetraalkylammonium and tetraalkylphosphonium. Examples of aliphatic cyclic ammoniums include pyrrolidinium, morpholinium, imidazolinium, tetrahydropyrimidinium, piperazinium, and piperidinium. Examples of nitrogen-containing heterocyclic aromatic cations include pyridinium and imidazolium. Examples of an anion constituting the ionic liquid include PF₆⁻, BF₄⁻, SbF₆⁻, A_{S}F₆⁻, SO₃CF₃⁻, N(SO₂F)₂⁻, N(SO₂CF₃)₂⁻, N(SO₂C₂F₅)₂⁻, N(SO₂CF₃)(SO₂C₄F₉)⁻, and C(SO₂CF₃)₃⁻. The ionic liquid may contain a lithium salt.

The outer casing 28 is formed of, for example, a material obtained by laminating a metal foil such as an aluminum foil with a resin film such as a PET film. The outer casing 28 may be a container made of resin or metal.

The form of the secondary battery 100 is not limited to a stacked type. Other forms of the secondary battery 100 include a coin type, a cylindrical type, a prismatic type, a sheet type, a button type, and a flat type.

The secondary battery according to Embodiment 2 exhibits enhanced initial charge and discharge efficiency owing to the inclusion of the composite particle for a negative electrode material according to Embodiment 1 in the negative electrode.

### (Other Embodiments)

### (Supplementary Description)

The above description of the embodiments discloses the following techniques.

### (Technique 1)

A composite particle for a negative electrode material, including:
a carbon phase; and
silicon particles dispersed in the carbon phase, wherein
in an X-ray diffraction pattern obtained by X-ray diffraction measurement using Cu-Kα radiation, a full width at half maximum of an X-ray diffraction peak derived from a Si(111) plane is 0.1° or more and less than 0.75°, and
an average value of aspect ratios of the silicon particles is 1.0 or more and 1.6 or less.

According to this configuration, the initial charge and discharge efficiency of the battery can be enhanced.

### (Technique 2)

The composite particle for a negative electrode material according to Technique 1, wherein the full width at half maximum is 0.2° or more and 0.4° or less. According to this configuration, the initial charge and discharge efficiency of the battery can be enhanced.

### (Technique 3)

The composite particle for a negative electrode material according to Technique 1 or 2, wherein an average particle diameter of the silicon particles is 10 nm or more and 100 nm or less. According to this configuration, the initial charge and discharge efficiency of the battery can be enhanced.

### (Technique 4)

The composite particle for a negative electrode material according to Technique 3, wherein the average particle diameter is 25 nm or more and 65 nm or less. According to this configuration, the initial charge and discharge efficiency of the battery can be enhanced.

### (Technique 5)

The composite particle for a negative electrode material according to any one of Techniques 1 to 4, wherein a pore volume is 0.10 cc/g or less. According to this configuration, the initial charge and discharge efficiency of the battery can be enhanced.

### (Technique 6)

The composite particle for a negative electrode material according to any one of Techniques 1 to 5, wherein the pore volume is 0.01 cc/g or more and 0.08 cc/g or less. According to this configuration, the initial charge and discharge efficiency of the battery can be enhanced.

### (Technique 7)

The composite particle for a negative electrode material according to any one of Techniques 1 to 6, wherein a percentage of Si in the composite particle for a negative electrode material is 35.0 mass% or more and 60.0 mass% or less. According to this configuration, the initial charge and discharge efficiency of the battery can be enhanced.

### (Technique 8)

The composite particle for a negative electrode material according to any one of Techniques 1 to 7, wherein a percentage of N in the composite particle for a negative electrode material is 0.05 mass% or more and 1.0 mass% or less. According to this configuration, the charge and discharge efficiency of the battery can be further enhanced.

### (Technique 9)

The composite particle for a negative electrode material according to any one of Techniques 1 to 8, wherein a percentage of O in the composite particle for a negative electrode material is less than 6.3 mass%. According to this configuration, the initial charge and discharge efficiency of the battery can be further enhanced.

### (Technique 10)

The composite particle for a negative electrode material according to any one of Techniques 1 to 9, wherein the carbon phase is composed of an amorphous carbonaceous material. According to this configuration, the initial charge and discharge efficiency of the battery can be enhanced.

### (Technique 11)

The composite particle for a negative electrode material according to any one of Techniques 1 to 10, wherein in an X-ray diffraction pattern obtained by X-ray diffraction measurement using Cu-Kα radiation, a full width at half maximum of an X-ray diffraction peak derived from a C(002) plane within a diffraction angle 2θ range from 23.0° to 26.0° is 4.0° or more and 9.5° or less. According to this configuration, the initial charge and discharge efficiency of the battery can be enhanced.

### (Technique 12)

The composite particle for a negative electrode material according to any one of Techniques 1 to 11, wherein a true density is 2.0 g/cc or more and 2.2 g/cc or less. According to this configuration, owing to the silicon particles being coated with the dense carbon phase, the initial charge and discharge efficiency of the battery can be enhanced.

### (Technique 13)

The composite particle for a negative electrode material according to any one of Techniques 1 to 12, wherein a specific surface area is 11.0 m²/g or less. According to this configuration, the initial charge and discharge efficiency of the battery can be enhanced.

### (Technique 14)

A secondary battery including:
a negative electrode including the composite particle for a negative electrode material according to any one of Techniques 1 to 13;
a positive electrode; and
an electrolyte.

According to this configuration, the effect of enhancing the initial charge and discharge efficiency can be obtained.

### Examples

The present disclosure is described in more detail below with reference to examples. The following examples are merely illustrative of one embodiment and are not intended to limit the present disclosure.

### [Preparation of Composite Particles for Negative Electrode Material]

### (Example 1)

Silicon particles having an average particle diameter of 40 nm and an aspect ratio of 1.3 were prepared. The average particle diameter and the aspect ratio of the silicon particles were calculated from an SEM image of the silicon particles obtained using a scanning electron microscope. Specifically, from the maximum Feret diameters of 500 particles randomly selected in an SEM image of the silicon particles, the median diameter (D50) and the median of the number-based distribution of the aspect ratios were calculated as the average particle diameter and the aspect ratio, respectively.

An amount of 50 g of the silicon particles, 10 g of polyvinylpyrrolidone as a binder, and 50 g of zirconia balls as a mixing medium were introduced into a rocking mill and mixed at 60 Hz for 1 minute. After mixing, 55 g of petroleum pitch was further introduced into the rocking mill, followed by mixing at 60 Hz for 1 minute.

The resulting mixture was pressure-formed by cold isostatic pressing (CIP) at 190 MPa for 5 minutes. Thus, a formed body was obtained.

The formed body obtained was heat-treated in an argon atmosphere at a heating rate of 100°C/min at 800°C for 5 hours, thereby obtaining composite particles in which silicon and carbon were composited.

The composite particles obtained were pulverized using a cutter mill at 18,000 rpm for 5 minutes. An amount of 3.25 g of petroleum pitch was added to 50 g of the composite particles pulverized, and the heat treatment and pulverization were again performed under the same conditions.

The above heat treatment and pulverization were each repeated once more. Thus, the composite particles for a negative electrode material of Example 1 were obtained.

### (Example 2)

The composite particles for a negative electrode material of Example 2 were obtained in the same manner as in Example 1, except that silicon particles having an average particle diameter of 25 nm and an aspect ratio of 1.2 were used.

### (Example 3)

The composite particles for a negative electrode material of Example 3 were obtained in the same manner as in Example 1, except that silicon particles having an average particle diameter of 50 nm and an aspect ratio of 1.2 were used.

### (Example 4)

The composite particles for a negative electrode material of Example 4 were obtained in the same manner as in Example 1, except that silicon particles having an average particle diameter of 65 nm and an aspect ratio of 1.2 were used.

### (Example 5)

The composite particles for a negative electrode material of Example 5 were obtained in the same manner as in Example 1, except that silicon particles having an average particle diameter of 110 nm and an aspect ratio of 1.2 were used.

### (Example 6)

The composite particles for a negative electrode material of Example 6 were obtained in the same manner as in Example 1, except that silicon particles differing in crystallinity from the silicon particles used in Example 1 and having an aspect ratio of 1.2 were used.

### (Example 7)

The composite particles for a negative electrode material of Example 7 were obtained in the same manner as in Example 6, except that silicon particles differing in crystallinity from the silicon particles used in Example 1 and from the silicon particles used in Example 6 were used.

### (Example 8)

The composite particles for a negative electrode material of Example 8 were obtained in the same manner as in Example 1, except that silicon particles having an aspect ratio of 1.0 were used.

### (Example 9)

The composite particles for a negative electrode material of Example 9 were obtained in the same manner as in Example 1, except that silicon particles having an aspect ratio of 1.6 were used.

### (Example 10)

The composite particles for a negative electrode material of Example 10 were obtained in the same manner as in Example 1, except that the amount of the petroleum pitch introduced into the rocking mill was set to 32.5 g.

### (Example 11)

The composite particles for a negative electrode material of Example 11 were obtained in the same manner as in Example 1, except that the amount of the petroleum pitch introduced into the rocking mill was set to 85 g.

### (Example 12)

The composite particles for a negative electrode material of Example 12 were obtained in the same manner as in Example 1, except that the amount of the binder introduced into the rocking mill was set to 16.5 g.

### (Example 13)

The composite particles for a negative electrode material of Example 13 were obtained in the same manner as in Example 1, except that the amount of the binder introduced into the rocking mill was set to 1.65 g.

### (Example 14)

The composite particles for a negative electrode material of Example 14 were obtained in the same manner as in Example 1, except that the binder introduced into the rocking mill was set to 1.65 g of polyethylene glycol.

### (Reference Example 1)

An amount of 50 g of silicon particles having an average particle diameter of 10 µm and 2 kg of zirconia beads were pulverized using a ball mill at 1,000 rpm for 5 hours. The resulting silicon particles had an average particle diameter of 150 nm and an aspect ratio of 2. The composite particles for a negative electrode material of Reference Example 1 were obtained in the same manner as in Example 1, except that the silicon particles obtained above were used.

### (Reference Example 2)

An amount of 50 g of silicon particles having an average particle diameter of 10 µm and 2 kg of zirconia beads were pulverized using a ball mill at 1,000 rpm for 15 hours. The resulting silicon particles had an average particle diameter of 40 nm and an aspect ratio of 2.5. The composite particles for a negative electrode material of Reference Example 2 were obtained in the same manner as in Example 1, except that the silicon particles obtained above were used.

### [Cross-sectional SEM Observation]

From cross-sectional SEM images of the composite particles for a negative electrode material of Examples 1 to 14 and Reference Examples 1 and 2, the average values of the aspect ratios and the average particle diameters of the silicon particles were determined. The results are shown in Table 1.

### [BET Specific Surface Area]

The BET specific surface areas of the composite particles for a negative electrode material of Examples 1 to 14 and Reference Examples 1 and 2 were determined by the multipoint BET method using a nitrogen gas adsorption apparatus (BEL SOAP Mini X, manufactured by MicrotracBEL Corp.). The value calculated in the relative pressure range from 0.1 to 0.3 was defined as the surface area. The measurement results are shown in Table 1.

### [Pore Volume]

The pore volumes of the composite particles for a negative electrode material of Examples 1 to 14 and Reference Examples 1 and 2 were determined by the BJH method using a nitrogen gas adsorption apparatus (BEL SOAP Mini X, manufactured by MicrotracBEL Corp.). The measurement results are shown in Table 1.

### [X-ray Diffraction]

X-ray diffraction patterns of the composite particles for a negative electrode material of Examples 1 to 14 and Reference Examples 1 and 2 were obtained by powder X-ray diffraction measurement. An X-ray diffractometer (ENPYREAN, manufactured by Spectris Co., Ltd.) was used for the measurement. Cu-Kα radiation (wavelengths of 1.5405 Å and 1.5444 Å) was used as the X-ray source. The full width at half maximum of the peak derived from the Si(111) plane in the X-ray diffraction pattern is shown in Table 1.

### [Component Analysis]

The composite particles for a negative electrode material of Examples 1 to 14 and Reference Examples 1 and 2 were measured for the mass percentage of Si, the mass percentage of C, the mass percentage of N, and the mass percentage of O therein, as follows. The measurement results are shown in Table 1.

The mass percentage of Si in the composite particles was measured by quantifying Si using Si-NMR under the following conditions.

### <Si-NMR Measurement Conditions>

Measurement apparatus: solid-state nuclear magnetic resonance spectrometer (INOVA-400), manufactured by Varian, Inc.
Probe: Varian 7 mm CPMAS-2
MAS: 4.2 kHz
MAS speed: 4 kHz
Pulse: DD (45° pulse + signal acquisition time with 1H decoupling)
Repetition time: 1,200 s to 3,000 s
Spectral width: 100 kHz
Spectral center: around -100 ppm
Signal acquisition time: 0.05 s
Number of scans: 560
Sample amount: 207.6 mg

The mass percentage of C in the composite particles was measured by a highfrequency induction heating furnace combustion-infrared absorption method using a carbon/sulfur analyzer (EMIA-520, manufactured by HORIBA, Ltd.). A sample was weighed into a porcelain boat, to which a combustion aid was added, and the sample was introduced into a combustion furnace (carrier gas: oxygen) heated to 1,350°C. The amount of carbon dioxide gas generated during combustion was detected by infrared absorption. C was quantified by calculating the carbon content of the sample using a calibration curve prepared with carbon steel manufactured by Bureau of Analysed Samples Ltd. (carbon content: 0.49%).

The mass percentage of N and the mass percentage of O in the composite particles were measured using an oxygen/nitrogen/hydrogen analyzer (EGMA-830, manufactured by HORIBA, Ltd.). The sample was placed into a Ni capsule, and the capsule was introduced, together with Sn pellets and Ni pellets serving as fluxes, into a carbon crucible heated at an electric power of 5.75 kW. The released carbon dioxide gas, carbon monoxide gas, and nitrogen gas were detected. O was quantified by calculating the oxygen content of the sample using a calibration curve prepared with NS-16-2 (steel standard sample). N was quantified by calculating the nitrogen content of the sample using a calibration curve prepared with SS-2-115 (steel standard sample).

### [Fabrication of Evaluation Cell]

The evaluation cells of Examples 1 to 14 and Reference Examples 1 and 2 were fabricated using the composite particles for a negative electrode material of Examples 1 to 14 and Reference Examples 1 and 2, as follows.

### (Preparation of Negative Electrode)

The composite particles for a negative electrode material and graphite were mixed in a mass ratio of 5:95 to prepare a negative electrode active material. A negative electrode mixture containing the negative electrode active material, sodium carboxymethyl cellulose (CMC-Na), and styrene-butadiene rubber (SBR) in a mass ratio of the negative electrode active material: CMC-Na:SBR = 97.5:1:1.5 was stirred with the addition of water. Thus, a negative electrode slurry was prepared. Next, the negative electrode slurry was applied to both surfaces of a copper foil so that the mass of the negative electrode mixture was 190 g per 1m². The resulting coating film was dried, and then rolled to prepare a negative electrode in which a negative electrode mixture layer having a density of 1.5 g/cm³ was formed on both surfaces of the copper foil.

### (Preparation of Positive Electrode)

A positive electrode mixture was prepared that included a positive electrode active material LiNi_{0.88}Co_{0.09}Al_{0.03}O₂, acetylene black (AB), and polyvinylidene fluoride (PVDF) in a mass ratio of the positive electrode active material:AB:PVDF = 95:2.5:2.5. The positive electrode mixture was stirred with the addition of N-methyl-2-pyrrolidone (NMP) to prepare a positive electrode slurry. Next, the positive electrode slurry was applied to both surfaces of an aluminum foil, the resulting coating film was dried, and then rolled to prepare a positive electrode in which a positive electrode mixture layer having a density of 3.6 g/cm³ was formed on both surfaces of the aluminum foil.

### (Preparation of Electrolyte Solution)

A nonaqueous electrolyte solution was prepared by dissolving LiPF₆ at a concentration of 1.0 mol/L in a solvent mixture containing ethylene carbonate (EC) and diethyl carbonate (DEC) in a volume ratio of EC:DEC = 3:7.

### (Fabrication of Secondary Battery)

A tab was attached to each of the positive electrode and the negative electrode, and the positive electrode and the negative electrode were wound in a spiral form with a separator interposed therebetween so that the tabs were positioned at the outermost periphery. Thus, an electrode group was fabricated. The electrode group was placed into an outer casing made of an aluminum laminated film, vacuum dried at 105°C for 2 hours, and the nonaqueous electrolyte solution was then injected thereinto. The opening of the outer casing was sealed, and thus a secondary battery as an evaluation cell was obtained.

### [Evaluation of Charge and Discharge Efficiency]

For the evaluation cells of Examples 1 to 14 and Reference Examples 1 and 2, at an ambient temperature of 25°C, a constant-current charge was performed at a current value of 1 It (800 mA) until the voltage reached 4.2 V, and a constant-voltage charge was then performed at a voltage of 4.2 V until the current reached 1/20 It (40 mA). Thereafter, a rest period of 10 minutes was provided, and a constant-current discharge was then performed at a current value of 1 It (800 mA) until the voltage reached 2.5 V. Thus, the initial charge and discharge efficiency of the evaluation cells of Examples 1 to 14 and Reference Examples 1 and 2 was evaluated. The relative values of charge and discharge efficiency are shown in Table 1, with the value of Reference Example 2 set as 100%.

**[Table 1]**

| | Si particle diameter [nm] | Aspect ratio | BET [m²/g] | Pore volume [cc/g] | Full width at half maximum [°] | Si [mass%] | C [mass%] | N [mass%] | O [mass%] | Charge and discharge efficiency [%] |
|---|---|---|---|---|---|---|---|---|---|---|
| Example 1 | 40 | 1.3 | 9 | 0.02 | 0.3 | 48.8 | 45 | 0.3 | 5.8 | 107 |
| Example 2 | 25 | 1.2 | 11 | 0.05 | 0.3 | 48.9 | 45 | 0.3 | 5.8 | 105 |
| Example 3 | 50 | 1.2 | 8 | 0.01 | 0.3 | 48.9 | 45 | 0.3 | 5.8 | 108 |
| Example 4 | 65 | 1.2 | 6 | 0.01 | 0.3 | 48.9 | 45 | 0.3 | 5.8 | 111 |
| Example 5 | 110 | 1.2 | 12 | 0.08 | 0.3 | 48.9 | 45 | 0.3 | 5.8 | 104 |
| Example 6 | 40 | 1.2 | 9 | 0.02 | 0.2 | 48.9 | 45 | 0.3 | 5.8 | 108 |
| Example 7 | 40 | 1.2 | 9 | 0.02 | 0.4 | 48.9 | 45 | 0.3 | 5.8 | 107 |
| Example 8 | 40 | 1.0 | 8 | 0.01 | 0.3 | 48.9 | 45 | 0.3 | 5.8 | 111 |
| Example 9 | 40 | 1.6 | 11 | 0.04 | 0.3 | 48.9 | 45 | 0.3 | 5.8 | 105 |
| Example 10 | 40 | 1.2 | 11 | 0.05 | 0.3 | 58.9 | 35 | 0.3 | 5.8 | 105 |
| Example 11 | 40 | 1.2 | 7 | 0.01 | 0.3 | 38.9 | 55 | 0.3 | 5.8 | 111 |
| Example 12 | 40 | 1.2 | 6 | 0.01 | 0.3 | 49.5 | 45 | 0.5 | 5 | 111 |
| Example 13 | 40 | 1.2 | 11 | 0.05 | 0.3 | 48.7 | 45 | 0.05 | 6.25 | 105 |
| Example 14 | 40 | 1.2 | 15 | 0.10 | 0.3 | 48.0 | 45 | 0 | 7 | 103 |
| Reference Example 1 | 150 | 2 | 13 | 0.10 | 0.5 | 53.9 | 40 | 0.3 | 6.8 | 98 |
| Reference Example 2 | 40 | 2.5 | 9 | 0.10 | 0.3 | 48.9 | 45 | 0.3 | 5.8 | 100 |

### (Discussion)

The batteries using the composite particles for a negative electrode material of Examples 1 to 14 exhibited enhanced initial charge and discharge efficiency compared with Reference Examples 1 and 2.

### INDUSTRIAL APPLICABILITY

The technique of the present disclosure is useful for batteries such as lithium-ion secondary batteries.

## Claims

1. A composite particle for a negative electrode material, comprising:
a carbon phase; and
silicon particles dispersed in the carbon phase, wherein
in an X-ray diffraction pattern obtained by X-ray diffraction measurement using Cu-Kα radiation, a full width at half maximum of an X-ray diffraction peak derived from a Si(111) plane is 0.1° or more and less than 0.75°, and
an average value of aspect ratios of the silicon particles is 1.0 or more and 1.6 or less.

2. The composite particle for a negative electrode material according to claim 1, wherein
the full width at half maximum is 0.2° or more and 0.4° or less.

3. The composite particle for a negative electrode material according to claim 1, wherein
an average particle diameter of the silicon particles is 10 nm or more and 100 nm or less.

4. The composite particle for a negative electrode material according to claim 3, wherein
the average particle diameter is 25 nm or more and 65 nm or less.

5. The composite particle for a negative electrode material according to claim 1, wherein
a pore volume is 0.10 cc/g or less.

6. The composite particle for a negative electrode material according to claim 5, wherein
the pore volume is 0.01 cc/g or more and 0.08 cc/g or less.

7. The composite particle for a negative electrode material according to claim 1, wherein
a percentage of Si in the composite particle for a negative electrode material is 35.0 mass% or more and 60.0 mass% or less.

8. The composite particle for a negative electrode material according to claim 1, wherein
a percentage of N in the composite particle for a negative electrode material is 0.05 mass% or more and 1.0 mass% or less.

9. The composite particle for a negative electrode material according to claim 1, wherein
a percentage of O in the composite particle for a negative electrode material is less than 6.3 mass%.

10. The composite particle for a negative electrode material according to claim 1, wherein
the carbon phase is composed of an amorphous carbonaceous material.

11. The composite particle for a negative electrode material according to claim 1, wherein
in an X-ray diffraction pattern obtained by X-ray diffraction measurement using Cu-Kα radiation, a full width at half maximum of an X-ray diffraction peak derived from a C(002) plane within a diffraction angle 20 range from 23.0° to 26.0° is 4.0° or more and 9.5° or less.

12. The composite particle for a negative electrode material according to claim 1, wherein
a true density is 2.0 g/cc or more and 2.2 g/cc or less.

13. The composite particle for a negative electrode material according to claim 1, wherein
a specific surface area is 11.0 m²/g or less.

14. A secondary battery comprising:
a negative electrode comprising the composite particle for a negative electrode material according to any one of claims 1 to 13;
a positive electrode; and
an electrolyte.
